# EUROPEAN PATENT APPLICATION

(11) **EP 4 494 832 A1**
(43) Date of publication of application: **22.01.2025**
(21) Application number: 24189598.6
(22) Date of filing: 18.07.2024
(51) Int. Cl.: B29B 11/16, C04B 35/80, C04B 38/00

(54) **POROSITY GRADIENT PREFORM ARCHITECTURE FOR HIGH TEMPERATURE COMPOSITES**

(30) Priority: 21.07.2023 US 202318356995
(71) Applicant: Rohr, Inc., Chula Vista, CA 91910-2098 (US)
(72) Inventor: THAI, Bryan, Poway (US); PUJAR, Vijay V., San Diego (US); WAUGH, Katherine E., Coronado (US); KOROLY, Christopher C., Spring Valley (US)
(74) Representative: Dehns

(57) **Abstract**

A porosity gradient fibrous preform (100) includes a plurality of fabric-resin layers (102) and a plurality of pore formers (115). Each fabric-resin layer (102) includes a plurality of fibers (112) and a resin (114). A volume of the plurality of pore formers (115) sequentially increases from a center of the porosity gradient fibrous preform (100) toward an outer surface (118, 119) of the porosity gradient fibrous preform (100). The pore formers (115) can be pyrolyzed from the preform to create paths through the porosity gradient fibrous preform (100) for infiltration of a fluid.

## Description

### FIELD

The present invention relates generally to apparatus, systems, and methods of manufacture for composite preform components and, more particularly, to a fibrous preform architecture for high temperature composites.

### BACKGROUND

Shaped composite bodies are utilized in aerospace applications. Various systems and methods are known in the art for forming a preform into a shaped composite body. In typical high temperature composite manufacturing, a dry fabric may be used to make a preform. The dry preform is then densified using gas infiltration. There are many variables that determine the success of the densification stage, including the number of available pathways for the gas to infiltrate uniformly into the center of the preform.

### SUMMARY

According to an aspect of the present invention, a porosity gradient fibrous preform is provided. The porosity gradient fibrous preform includes a plurality of fabric-resin layers, each comprising a plurality of fibers and a resin, and a plurality of pore formers mixed with the resin. A volume of the plurality of pore formers sequentially increases from a center of the porosity gradient fibrous preform toward an outer surface of the porosity gradient fibrous preform.

In various embodiments, the plurality of pore formers is configured to be volatilized from the porosity gradient fibrous preform to create a path through the porosity gradient fibrous preform for infiltration of a fluid. In various embodiments, at least a portion of the resin is configured to be pyrolyzed from the porosity gradient fibrous preform to create the path through the porosity gradient fibrous preform for infiltration of the fluid. The path can create a porosity gradient in the porosity gradient fibrous preform.

In various embodiments, a composition of the resin and the pore former are the same throughout the plurality of fabric-resin layers. In various embodiments, a ratio of the resin to the pore former sequentially decreases from a center of the porosity gradient fibrous preform toward an outer surface of the porosity gradient fibrous preform.

In various embodiments, the plurality of fabric-resin layers includes a first fabric-resin layer having a first portion of the plurality of fibers, a first portion of the resin, and a first portion of the plurality of pore formers, and a second fabric-resin layer having a second portion of the plurality of fibers, a second portion of the resin, and a second portion of the plurality of pore formers, the second fabric-resin layer being positioned further outward from the center of the porosity gradient fibrous preform than the first fabric-resin layer.

In various embodiments, the plurality of pore formers include a plurality of hollow microspheres, a wall of each microsphere of the plurality of microspheres includes a polymer resin configured to be compatible with the resin in the plurality of fabric-resin layers, the polymer resin in each microsphere of the plurality of microspheres and the resin in the plurality of fabric-resin layers are configured to combine together during curing, and the plurality of hollow microspheres and the resin in the plurality of fabric-resin layers are configured to pyrolyze to create interconnected pores through the porosity gradient fibrous preform.

In various embodiments, the plurality of pore formers include a plurality of hollow microspheres, each microsphere includes a polymer resin configured to volatilize during pyrolysis to create a plurality of voids in the porosity gradient fibrous preform, and the plurality of voids are interconnected to create a path for infiltration of a fluid.

In various embodiments, a first pore former volume of the first fabric-resin layer is less than a second pore former volume of the second fabric-resin layer.

In various embodiments, in response to applying heat to the first fabric-resin layer and the second fabric-resin layer, the second portion of the plurality of pore formers is configured to expand, and a first pore former volume of the first fabric-resin layer is configured to be less than a second pore former volume of the second fabric-resin layer. The plurality of pore formers can include a plurality of expandable hollow microspheres configured to expand at least 2x an original volume at a room temperature in response to being heated to a temperature above the room temperature. The expandable hollow microspheres can include a blowing agent captured in a thermoplastic polymer.

In various embodiments, a fiber volume of the plurality of fibers for each fabric-resin layer is uniform throughout the plurality of fabric-resin layers. A percentage of the fiber volume can be at least 25% by volume of the porosity gradient fibrous preform.

According to an aspect of the present invention, a manufacturing method is provided. The manufacturing method includes forming a porosity gradient fibrous preform by arranging a plurality of fabric-resin layers, each comprising a plurality of fibers and a resin, mixing a plurality of pore formers with the resin, a volume of the plurality of pore formers sequentially increases from a center of the porosity gradient fibrous preform toward an outer surface of the porosity gradient fibrous preform, and pyrolyzing the plurality of pore formers from the porosity gradient fibrous preform to create a path through the porosity gradient fibrous preform for infiltration of a fluid.

In various embodiments, a porosity gradient is formed in the porosity gradient fibrous preform in response to pyrolyzing the plurality of pore formers from the porosity gradient fibrous preform.

In various embodiments, a composition of the resin is the same throughout the plurality of fabric-resin layers.

In various embodiments, arranging the plurality of fabric-resin layers includes positioning a second fabric-resin layer over a first fabric-resin layer having a first portion of the plurality of fibers, a first portion of the resin, and a first portion of the plurality of pore formers, the second fabric-resin layer having a second portion of the plurality of fibers, a second portion of the resin, and a second portion of the plurality of pore formers, the second fabric-resin layer being positioned further outward from the center of the porosity gradient fibrous preform than the first fabric-resin layer.

In various embodiments, a first volume of the first portion of the plurality of pore formers is less than a second volume of the second portion of the plurality of pore formers. In various embodiments, the first volume is between 0% and 10 % and the second volume is greater than the first volume.

In various embodiments, a fiber volume of the plurality of fibers for each fabric-resin layer is uniform throughout the plurality of fabric-resin layers, and a percentage of the fiber volume is at least 25% by volume of the porosity gradient fibrous preform.

According to an aspect of the present invention, a manufacturing method is provided. The manufacturing method includes forming a porosity gradient fibrous preform by positioning a second fabric-resin layer over a first fabric-resin layer having a first plurality of fibers, a first resin, and a first plurality of pore formers, the second fabric-resin layer having a second plurality of fibers, a second resin, and a second plurality of pore formers, the second fabric-resin layer being positioned further outward from a center of the porosity gradient fibrous preform than the first fabric-resin layer, applying a first heat to the second fabric-resin layer and the first fabric-resin layer, expanding the second plurality of pore formers so that a volume of the second plurality of pore formers is greater than a first volume of the first plurality of pore formers, and pyrolyzing the first plurality of pore formers and the second plurality of pore formers from the porosity gradient fibrous preform to create a path through the porosity gradient fibrous preform for infiltration of a fluid.

In various embodiments, pyrolyzing the first plurality of pore formers and the second plurality of pore formers from the porosity gradient fibrous preform creates a first porosity in the first fabric-resin layer and a second porosity in the second fabric-resin layer, the second porosity being greater than the first porosity.

The present invention may include any one or more of the individual features disclosed above and/or below alone or in any combination thereof.

The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1 illustrates a porosity gradient fibrous preform using fiber fabric-resin layers having varying volume of pore formers, in accordance with various embodiments.
FIG. 2 illustrates two fabric-resin layers having different quantities of pore formers undergoing a pyrolysis step and forming a first porosity in a first fabric-resin layer and a second porosity in a second fabric-resin layer, in accordance with various embodiments.
FIG. 3A and FIG. 3B illustrate a porosity gradient fibrous preform undergoing a curing step whereby pore formers in different fabric-resin layers expand at varying rates, in accordance with various embodiments.
FIG. 3C illustrates the porosity gradient fibrous preform of FIG. 3B undergoing a pyrolysis step whereby the pore formers are pyrolyzed and leaving behind pores, in accordance with various embodiments.
FIG. 4 illustrates a schematic view a pore of a porosity gradient fibrous preform during a Chemical Vapor Infiltration (CVI) process, in accordance with various embodiments.
FIG. 5 illustrates a method of forming a porosity gradient fibrous preform for a high temperature composite, in accordance with various embodiments.
FIG. 6 illustrates a micro cross-section picture of a porosity gradient fibrous preform, in accordance with various embodiments.
FIG. 7 illustrates a micro cross-section picture of a porosity gradient fibrous preform, in accordance with various embodiments.
FIG. 8 illustrates a micro cross-section picture of a porosity gradient fibrous preform, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the invention, it should be understood that other embodiments may be realized and that changes may be made without departing from the scope of the invention. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an," or "the" may include one or more than one and that reference to an item in the singular may also include the item in the plural. Further, all ranges may include upper and lower values and all ranges and ratio limits disclosed herein may be combined.

Various systems and methods are known in the art for generating a fibrous preform for carbon-carbon and/or ceramic composites. In typical carbon-carbon and/or ceramic manufacturing, a fibrous preform may be manufactured and this fibrous preform may then be densified using gas infiltration. There are many variables that determine the success of the densification stage, including the number of available pathways for the gas to infiltrate uniformly into the center of the fibrous preform. Typically, fiber volume and lack of adequate gas flow paths inhibit uniform densification and yield a component with greater than 10 percent enclosed porosity.

Disclosed herein are systems and methods for a porosity gradient fibrous preform architecture for high temperature composites that provides numerous pathways for fluids, i.e. uniform gas, infiltration into the center of the porosity gradient fibrous preform during densification. In various embodiments, pore formers of various size and/or type are disposed into fabric-resin layers of, for example, woven fabric-resin layers, non-crimp fabric-resin layers, such as unidirectional or stitched unidirectional, or felt fabric-resin layers. A fibrous preform of the present invention includes several fiber-resin layers and features a porosity gradient wherein the preform has a lower porosity at the center of the preform and sequentially higher porosity in a direction away from the center of the preform toward the outer surface of the preform. The gradient may be generated by a size of pores or a number of pores or both. The pores are interconnected to provide a path for subsequent infiltration. Low porosity implies the space is occupied by a non-porous material-e.g., fiber or resin.

As used herein, a fusible fiber is comprised of one or more polymers with a combined char yield of 25% elemental carbon or greater by weight and a residual mass of less than 1% by weight. As used herein, a fugitive fiber or a fugitive resin is comprised of one or more polymers with a combined char yield of 5% elemental carbon or less by weight, and a residual mass of less than 1% by weight. As used herein, a fugitive pore former is a material with a combined char yield of 5% elemental carbon or less by weight, and a residual mass of less than 1% by weight. As used herein, char yield is defined as the weight of the carbon remaining expressed as a percentage of the total starting weight of the fiber or resin when the fiber material or resin material is heated (or pyrolyzed) in an inert atmosphere (e.g., nitrogen or argon) at temperatures of up to about 1000 degrees Celsius (about 1832 degrees Fahrenheit). As used herein, residual mass is defined as the weight of the fiber remaining expressed as a percentage of the total weight of the starting fiber when the fiber material is heated (or oxidized) in an oxidizing atmosphere (e.g., air, or oxygen) at temperatures of up to about 1000 degrees Celsius (about 1832 degrees Fahrenheit). It should be noted that while a residual mass of 1% or less is preferred in the production of carbon-carbon composite structures for high temperature applications, a residual mass of greater than 1% may be acceptable for certain lower temperature applications or in applications where the excessive residual mass and the associated residues do not adversely impact performance.

In various embodiments, the fabric-resin layers may be stacked, in a near net shape tool, with each successive layer containing the desired quantity and/or type of pore former thereby forming a porosity gradient fibrous preform. In various embodiments, the pore former size, quantity, and/or type may be varied such that interior plies of the porosity gradient fibrous preform may contain a lower volume of pore formers while the exterior plies of the porosity gradient fibrous preform may conversely contain a higher volume of pore formers. In various embodiments, during stacking, the fabric-resin layers may be tacked together using a variety of methods, e.g., an adhesive tackifier, a hot iron to locally melt a binder, among others. In various embodiments, as the porosity gradient fibrous preform is stacked, the various fabric-resin layers may be joined through thickness reinforcement (TTR) via needling, tufting, stitching, or z-pinning, using a TTR fiber thread. In various embodiments, once all the fabric-resin layers are stacked, then all the fabric-resin layers are needled, tufted, stitched, or z-pinned together. In various embodiments, as each successive fabric-resin layer is added, then the fabric-resin layers may be needled, tufted, stitched, or z-pinned together. In various embodiments, the needling, tufting, stitching, or z-pinning may penetrate all the fabric-resin layers. In various embodiments, the needling, tufting, stitching, or z-pinning may penetrate only a predefined number of fabric-resin layers. In various embodiments, a number of fabric-resin layers that are needled, tufted, stitched, or z-pinned may vary as the porosity gradient fibrous preform is generated. In various embodiments, once the porosity gradient fibrous preform is completely stacked and needled, the porosity gradient fibrous preform may be placed in a close die mold or vacuum bag tooling and subjected to heat and pressure to consolidate and cure the porosity gradient fibrous preform.

In various embodiments, once consolidation and cure is complete, the porosity gradient fibrous preform may undergo pyrolysis, or heat-treatment in an inert environment (pyrolysis may be alternatively referred to as pyrolyzation), where the pore formers (and in various embodiments the resin) in the porosity gradient fibrous preform are burned, melted, and/or evaporated, and the remaining resin decompose leaving behind a carbon char that forms the matrix to form a porosity gradient preform. In various embodiments, once pyrolysis is complete, the porosity gradient fibrous preform may undergo CVI densification. In various embodiments, once the CVI densification is complete, the porosity gradient fibrous preform may undergo skim cut machining where the surface of the porosity gradient fibrous preform is modified to meet a set of standards for the porosity gradient fibrous preform. In various embodiments, the pyrolysis, CVI densification and skim cutting may be repeated until a desired part density is reached. In various embodiments, once the desired part density is reached, a final machining may be performed on the porosity gradient fibrous preform to meet desired porosity gradient fibrous preform dimensions.

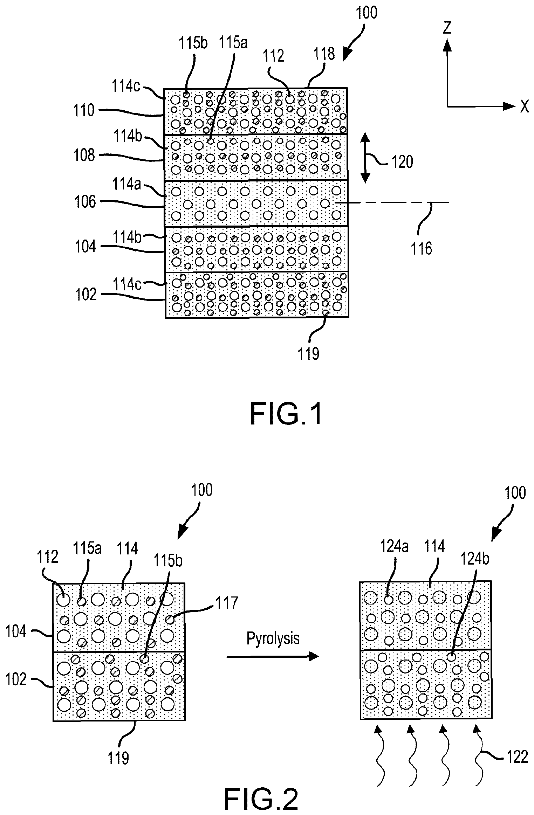

With reference to FIG. 1, in accordance with various embodiments, a porosity gradient fibrous preform 100 using fabric-resin layers having varying volume of pore formers that result in sequentially increasing porosities is illustrated. In various embodiments, as illustrated in FIG. 1, each of the fabric-resin layers 102, 104, 106, 108, and 110 can have a consistent volume of fibers 112 (e.g., carbon fibers). Stated differently, a fiber volume of the plurality of fibers 112 for each fabric-resin layer 102, 104, 106, 108, and 110 is uniform throughout the porosity gradient fibrous preform 100. In various embodiments, fiber volume is greater than 10% of the total volume of the preform 100. In various embodiments, fiber volume is greater than 25% of the total volume of the preform 100. In various embodiments, fiber volume can be between 30% and 50% for carbon-carbon or ceramic matrix composites, and up to 60% for thermoset composites. Each of the fabric-resin layers 102, 104, 106, 108, and 110 includes a resin (e.g., fabric-resin layer 106 includes a first resin 114a, fabric-resin layer 104 and fabric-resin layer 108 include a second resin 114b, and fabric-resin layer 102 and fabric-resin layer 110 include a third resin 114c; collectively referred to herein as resin 114). In this regard, each of the fabric-resin layers 102, 104, 106, 108, and 110 can be referred to herein as fabric-resin layers. Stated differently, each of the fabric-resin layers 102, 104, 106, 108, and 110 include a plurality of fibers 112 and a resin 114. Each of the fabric-resin layers 102, 104, 106, 108, and 110 can include the plurality of fibers 112 pre-impregnated with the resin 114 (i.e., the fibers 112 can be wetted with the resin 114 prior to the layers being stacked). Stated differently, each of the fabric-resin layers 102, 104, 106, 108, and 110 can be made of a composite prepreg ply. The resin 114, in accordance with various embodiments, can be a thermoset resin such as a phenolic resin, an epoxy resin, a vinyl ester resin, a polyester resin, a polyimide resin, a benzoxazine resin, a cyanate ester resin, or a bismaleimide (BMI) resin, among others. The resin 114 in each of the fabric-resin layers 102, 104, 106, 108, and 110 can have the same char yield. The resin 114 can have a char yield of 25% elemental carbon or greater by weight. In various embodiments, first resin 114a is the same type and/or composition of resin as second resin 114b and third resin 114c. In various embodiments, resin 114 can include a polyamide resin, such as a dimer acid-based (DAB) polyamide or a polyamide-epichlorohydrin (PAE) resin. In various embodiments, resin 114 can include an epoxy resin and/or a bismaleimide (BMI) resin. In various embodiments, resin 114 can include a phenolic resin.

The preform 100 further includes varying quantities of pore formers 115 in each of the fabric-resin layers 102, 104, 106, 108, and 110. For example, fabric-resin layer 108 and fabric-resin layer 104 can include a first plurality of pore formers 115a and fabric-resin layer 102 and fabric-resin layer 110 can include a second plurality of pore formers 115b, wherein pore formers 115a and pore formers 115b are collectively referred to herein as pore formers 115. In various embodiments, pore formers 115a and pore formers 115b are similar in size, wherein the quantity of the pore formers 115b is greater than the quantity of the pore formers 115a. In various embodiments, pore formers 115a and pore formers 115b are similar in quantity, wherein the size of the pore formers 115b is greater than the size of the pore formers 115a. For example, a diameter of the pore formers 115b is greater than a diameter of the pore formers 115a. In various embodiments, pore formers 115a and pore formers 115b are different in quantity and size. In this regard, the total volume of pore formers 115b can be greater than the total volume of pore formers 115a so as to create higher porosity in fabric-resin layer 110 and fabric-resin layer 102 than that of fabric-resin layer 108 fabric-resin layer 104. Stated differently, a volume of the pore formers 115 sequentially increases from a center (e.g., at centerline 116) of the porosity gradient fibrous preform 100 toward the outer surfaces (i.e., outer surface 118 and outer surface 119) of the porosity gradient fibrous preform 100. In various embodiments, the volume of pore formers 115 increases incrementally with each resin-fabric-resin layer (e.g., the volume of pore formers 115a is greater than the volume of pore formers in fabric-resin layer 106 (which can be zero in various embodiments) and the volume of pore formers 115b is greater than the volume of pore formers 115a).

In various embodiments, upon being cured, the resins 114 and pore formers 115 create a sequentially increasing porosity to create a path through the porosity gradient fibrous preform 100 for infiltration of a fluid, as described in further detail herein. Stated differently, a quantity of pore formers 115 is selected so that the porosity sequentially increases from a center of the porosity gradient fibrous preform 100 toward an outer surface (e.g., outer surface 118 and/or outer surface 119) of the porosity gradient fibrous preform 100. In this manner, a porosity of the resin 114, after being cured, corresponds with a position of the resin 114 with respect to centerline 116 (i.e., increasing porosity with distance of the resin 114 from the centerline 116).

In various embodiments, the pore formers 115 are fugitive pore formers. Stated differently, when heated to a pyrolysis temperature, the pore formers 115 can be burned, melted, or evaporated (and in their place are created pores in the resin matrix), and the remaining portion of the resin 114 is pyrolyzed into a carbon matrix to create a path (i.e., with the pores) through the thickness of the porosity gradient fibrous preform 100 for infiltration of fluids. In this regard, pore formers 115 are made of a fugitive material, for example a fugitive material such as a fugitive resin and/or a fugitive fiber. In various embodiments, pore formers 115 are made of fugitive material or fibers made of polyvinyl alcohol (PVA), polyethylene terephthalate (PET), nylon, polyethylene (PE), polyamide imide (PAI), or similar plastic, among others.

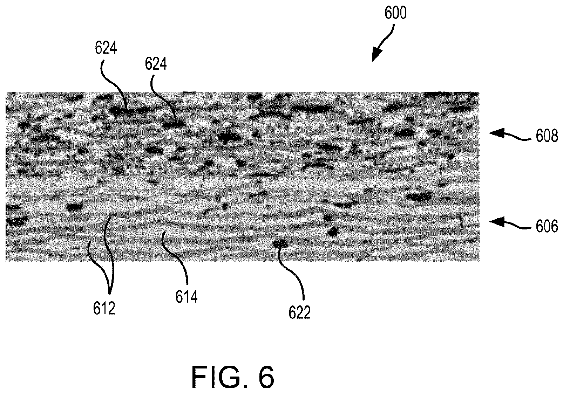

In various embodiments, pore formers 115 are made of hollow microspheres. A wall 117 of each microsphere (e.g., pore formers 115) can include a polymer resin configured to be compatible with the resin 114 in the plurality of fabric-resin layers 102, 104, 106, 108, 110. The polymer resin in each microsphere and the resin 114 are configured to combine together during curing (e.g., in response to being heated to the curing temperature). The plurality of hollow microspheres and the resin 114 in the plurality of fabric-resin layers are configured to pyrolyze to create interconnected pores (e.g., see FIG. 6, FIG. 7, and FIG. 8) through the porosity gradient fibrous preform 100. A volume of the pore formers 115 can remain substantially constant during the curing process and/or pyrolysis process described herein.

In various embodiments, the pore formers 115 can be hollow glass microspheres or hollow glass microspheres. According to various embodiments, the pore formers 115 are hollow glass microspheres selected from 3M^{™} Glass Bubbles series (A16/500, G18, A20/1000, H20/1000, D32/4500 and H50/10000EPX) and 3M^{™} Glass Bubbles series (such as but it is not limited to K1, K15, S15, S22, K20, K25, S32, S35, K37, XLD3000, S38, S38HS, S38XHS, K46, K42HS, S42XHS, S60, S60HS, iM16K, iM30K), sold by 3M company.

By increasing the pore former volume near the exterior of the porosity gradient fibrous preform 100, a porosity of the porosity gradient fibrous preform 100 increases-e.g., during or after a pyrolysis process as described herein-near the exterior of the porosity gradient fibrous preform 100 to thereby allow a fluid to infiltrate the interior of the porosity gradient fibrous preform 100 during a CVI process, as described herein, and thereby achieve more uniform and/or increased part density.

Although illustrated as having five fabric-resin layers 102, 104, 106, 108, and 110, it should be understood that any number of fabric-resin layers can be used to form the fibrous preform 100, so long as the fabric-resin layers are chosen to have increasing porosity from the centerline 116 toward the outer surface 118. In various embodiments, once the desired number of layers has been reached for the preform ply stack, fabric-resin layers 102, 104, 106, 108, and 110 may be joined through thickness reinforcement (TTR) via external needling, tufting, stitching, or z-pinning, among others. In various embodiments, the TTR utilizes a TTR fiber thread. In various embodiments, the TTR is performed in a uniform manner such that a number of needles, tufts, stiches, or z-pins are consistent along a length of the fabric-resin layers 102, 104, 106, 108, and 110 in the x-direction. In various embodiments, a transport depth in the z-direction of the TTR is through all the fabric-resin layers 102, 104, 106, 108, and 110 of the porosity gradient fibrous preform for the length of the porosity gradient fibrous preform in the x-direction. In various embodiments, generating a TTR fibrous preform in this manner takes advantage of random fiber placement for uniform densification in the through thickness direction, while maintaining high in-plane strengths.

In various embodiments, each fabric-resin layer 102, 104, 106, 108, and 110 has a directionality that coincides with the direction of the fibers 112. The directionality of adjacent fabric-resin layers (e.g., fabric-resin layer 106 and fabric-resin layer 108) can be the same, in accordance with various embodiments. The directionality of adjacent fabric-resin layers (e.g., fabric-resin layer 106 and fabric-resin layer 108) can differ, in accordance with various embodiments

FIG. 2 illustrates porosity gradient fibrous preform 100 undergoing a pyrolysis process, in accordance with various embodiments. In the illustrated embodiment, only fabric-resin layer 102 and fabric-resin layer 104 are shown for ease of illustration. However, it should be understood that porosity gradient fibrous preform 100 can include any number of fabric-resin layers with a sequentially decreasing volume of pore formers, for example including fabric-resin layers 106, 108, and 110, without departing from the scope of the present invention. The preform 100 undergoes the pyrolysis step by applying heat-illustrated by arrows 122—to the preform 100 where the pore formers 115 are burned, melted, or evaporated (thereby creating pores 124a and pores 124b; collectively referred to as pores 124) to create a path (i.e., with the pores 124) through the thickness of the preform 100 for infiltration of fluids during a CVI process. In this regard, the porosity of the preform 100 can be selected based upon the quantity and/or volume of the pore formers 115.

In various embodiments, the quantity and/or volume of the pore formers 115 is selected such that the ratio of pore formers 115 to resin 114 and fibers 112 in fabric-resin layer 102 is Z% by volume, where Z% is less than 50%. In various embodiments, the quantity and/or volume of the pore formers 115 is selected such that the ratio of pore formers 115 to resin 114 and fibers 112 in fabric-resin layer 104 is Y% by volume, where Y% is less than Z%. In various embodiments, the quantity and/or volume of the pore formers 115 is selected such that the ratio of pore formers 115 to resin 114 and fibers 112 in fabric-resin layer 106 is between 0% and X% by volume, where X% is less than Y%. The selected pore former volume for each fabric-resin layer can be chosen based upon the number of fabric-resin layers and the total thickness of the preform 100, among other factors. Accordingly, a ratio of the resin 114 to the pore former 115 sequentially decreases from a center of the porosity gradient fibrous preform 100 toward the outer surface 118, 119 of the porosity gradient fibrous preform 100.

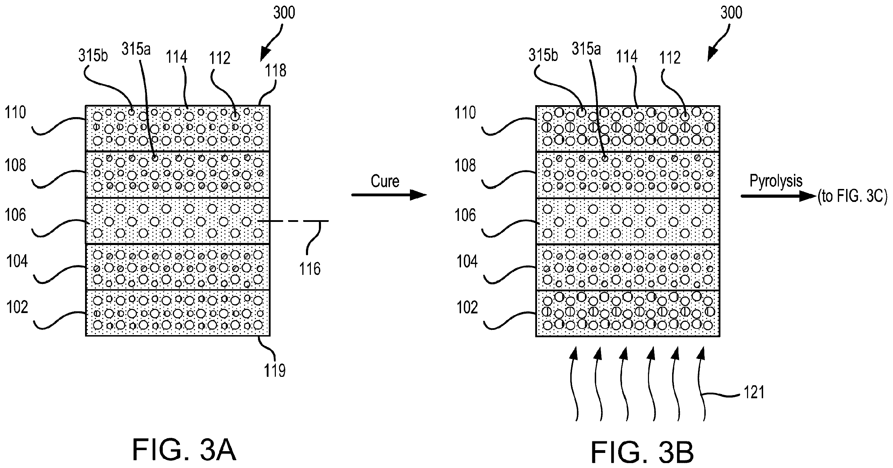

FIG. 3A and FIG. 3B illustrate a porosity gradient fibrous preform 300 before undergoing a cure process and during a cure process, respectively, in accordance with various embodiments. With respect to FIG. 3A through FIG. 3C, elements with like element numbering, as depicted in FIG. 1, are intended to be the same and will not necessarily be repeated for the sake of clarity. Porosity gradient fibrous preform 300 can be similar to porosity gradient fibrous preform 100 as described with respect to FIG. 1, in accordance with various embodiments. The preform 300 includes varying types of pore formers 315 in different fabric-resin layers 102, 104, 106, 108, and 110, wherein the pore formers 315 near the outer surfaces 118, 119 are configured to expand to generate a larger porosity in the preform 300 near the outer surfaces 118, 119 than the porosity near the centerline axis 116 in response to being heated to a cure temperature. Stated differently, the pore formers 315 can be configured to expand at varying degrees so as to create a sequentially increasing porosity in the preform 300 from the centerline axis 116 toward outer surfaces 118, 119. For example, fabric-resin layer 108 and fabric-resin layer 104 can include a first plurality of pore formers 315a and fabric-resin layer 102 and fabric-resin layer 110 can include a second plurality of pore formers 315b, wherein pore formers 315a and pore formers 315b are collectively referred to herein as pore formers 315. The second plurality of pore formers 315b can be configured to expand by a larger percentage than that of the first plurality of pore formers 315b so that, after being pyrolyzed, the second plurality of pore formers 315b leave behind larger pores or cavities than those of the first plurality of pore formers 315a.

Accordingly, the pore formers 315 can include expandable balloons or microspheres, for example, hollow expandable balloons or microspheres. The pore formers 315 can include expandable microspheres (commercially available under the name EXPANCEL^{®}). The microspheres can be coated with a polymeric coating. The microspheres can have a hollow core that is occupied by a gas. The expandable microsphere can include a blowing agent captured in a small diameter thermoplastic polymer shell or bubble. For example, the thermoplastic polymer shell or bubble can encapsulate one or more volatile substances such as light hydrocarbons or halocarbons (i.e., the blowing agent). The outer shells are usually thermoplastic in character to permit softening and expansion of the microspheres when heated due to volatilization of the substances trapped within the shells. The polymers used in the shells may be linear, branched, or cross-linked and may be comprised of, for example, acrylic resins, styrenic resins, polyvinylidene chloride, nitrile polymers, and the like. An average particle size of the expandable microspheres can be in the range of from about 5 to about 100 microns. Accordingly, the expandable pore formers 315 can be configured to expand in response to heat being applied to the expandable pore formers 315. In various embodiments, in response to being heated, the expandable pore formers 315 can be configured to expand up to 60x there original volume (e.g., at room temperature). In various embodiments, in response to being heated, the expandable pore formers 315 can be configured to expand at least 2x there original volume.

FIG. 3A illustrates the first plurality of pore formers 315a having a first volume at a first temperature (e.g., room temperature (e.g., 23 °C (73 °F))) and FIG. 3B illustrates the first plurality of pore formers 315a having a second volume at a second temperature (e.g., a cure temperature (e.g., between 100 °C (212 °F) and 400 °C (752 °F))). In FIG. 3B a heat 121-illustrated by arrows 121-can be applied to the preform 300 to heat the resin 114 and pore formers 315 to the cure temperature. In various embodiments, the first volume is equal to the second volume (i.e., the first plurality of pore formers 315a do not expand or minimally expand). In various embodiments, the second volume is between 1x and 10x of the first volume, but in any case the volume ratio of pore formers 315a is less than the volume ratio of pore formers 315b (i.e., pore formers 315a expand less than pore formers 315b).

FIG. 3A illustrates the second plurality of pore formers 315b having a third volume at the first temperature and FIG. 3B illustrates the second plurality of pore formers 315b having a fourth volume at the second temperature. In various embodiments, the third volume is greater the third volume. In various embodiments, the fourth volume is between 1x and 10x of the third volume, but in any case the volume ratio of pore formers 315b is greater than the volume ratio of pore formers 315a (i.e., pore formers 315b expand more than pore formers 315a). In various embodiments, the fourth volume is between 2x and 20x of the third volume. In various embodiments, pore formers 315b comprise a higher blowing agent content than pore formers 315a to thereby cause the pore formers 315b to expand more than pore formers 315a. In various embodiments, pore formers 315b comprise a first blowing agent and pore formers 315a comprise a second blowing agent configured to expand less than the first blowing agent.

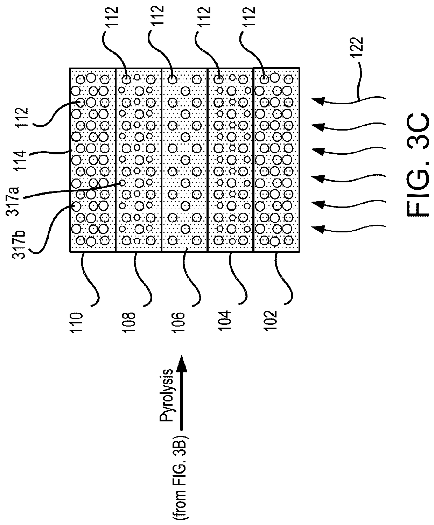

FIG. 3C illustrates the preform 300 undergoing a pyrolysis step by applying heat-illustrated by arrows 122—to the preform 300 where the pore formers 315 are burned, melted, or evaporated (thereby creating pores 317), and the remaining portion of the resin 114 is pyrolyzed into a carbon matrix to create a path (i.e., via the pores 317) through the thickness of the porosity gradient fibrous preform for infiltration of fluids. The porosity of the carbon matrix (i.e., the pyrolyzed resin) is determined, at least in part, by the size and/or volume of the pore formers 315. The size and/or volume of the pores 317b can be larger than that of the pores 317a. Accordingly, the quantity, size, and/or volume of the pore formers 315 can be selected to create a sequentially increasing porosity in a direction from the center of the preform 300 outward.

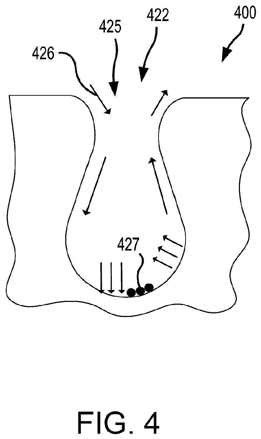

With momentary reference to FIG. 4, a portion of a porosity gradient fibrous preform 400 is illustrated during a CVI process. The porosity gradient fibrous preform 400 has a pore 422 defining a path 425 for a fluid-illustrated by the arrows 426-to infiltrate the porosity gradient fibrous preform 400. The pore 422 can be created using a pore former as described herein (i.e., the pore 422 can be left over after the pore former is pyrolyzed. Accordingly, the pores are interconnected across the fabric-resin layers such that, in response to the resin being pyrolyzed, the path 425 is created through the fabric-resin layers to allow a fluid (e.g., a CVI gas) to infiltrate through the thickness (e.g., the entire thickness) of the porosity gradient fibrous preform 400. The fluid 426 can be a hydrocarbon gas configured to infiltrate the preform at elevated temperatures (e.g., approximately 1000°C (1832°F), wherein the term "approximately in this regard means ±200°C (between 1472°F-2192°F)), whereby carbon 427 from the hydrocarbon gases separate from the gas and is deposited on and within the porosity gradient fibrous preform 400. In this regard, it should be appreciated that the increased porosity located near the outside surface of the porosity gradient fibrous preform results in additional paths whereby the fluid (e.g., hydrocarbon gases) can reach the interior of the porosity gradient fibrous preform to deposit carbon. As the porosity of the porosity gradient fibrous preform is decreased in the interior of the porosity gradient fibrous preform due to the deposited carbon during CVI, the fluid continues to fill the pores located near the outside surface of the porosity gradient fibrous preform, similarly decreasing porosity near the exterior of the porosity gradient fibrous preform, thereby resulting in an overall uniformly higher density carbon-carbon or ceramic component than if the porosity gradient hadn't existed in the first place. Stated differently, and with momentary additional reference to FIG. 6, during CVI, the pores 624 are not filled (or otherwise clogged from allowing CVI gasses to infiltrated the interior of the porosity gradient fibrous preform) with carbon deposited by the CVI fluid 426 until after the interior of the porosity gradient fibrous preform reaches a desired density. In this manner, the porosity gradient fibrous preform allows for uniform densification by providing additional and/or larger pathways for the CVI gasses to reach the interior of the porosity gradient fibrous preform.

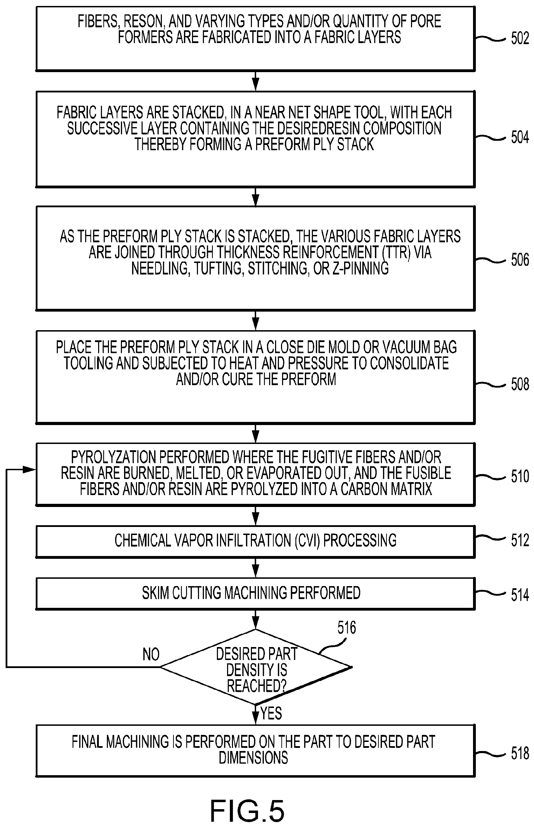

Referring now to FIG. 5, in accordance with various embodiments, a method of forming a porosity gradient fibrous preform for a high temperature composite is illustrated. At block 502, fabric-resin layers using uniform fiber volume, resin, and varying types and/or quantity of pore formers are fabricated into a fabric-resin layers of either woven fabric-resin layers, non-crimp fabric-resin layers, such as unidirectional or stitched unidirectional, or felt fabric-resin layers. At block 504, the fabric-resin layers are stacked, in a near net shape tool, with each successive layer containing the desired pore former type and/or quantity thereby forming a porosity gradient fibrous preform. At block 506, as the porosity gradient fibrous preform is stacked, the various fabric-resin layers may be joined through thickness reinforcement (TTR) via needling, tufting, stitching, or z-pinning, using a TTR fiber thread. It should be understood that the TTR step at block 506 is optional and can be omitted in various embodiments. At block 508, once the porosity gradient fibrous preform is completely stacked (and needled if desired), the porosity gradient fibrous preform may be placed in a close die mold or vacuum bag tooling and subjected to heat and pressure to consolidate the porosity gradient fibrous preform. In various embodiments, the resin in the porosity gradient fibrous preform may be cured (e.g., during or after consolidation) by applying heat and pressure to the resin 114. In various embodiments, different types and/or quantities of pore formers are used for different layers of the ply stack, as described herein, to achieve increasing porosity from the interior toward the exterior of the preform, thereby creating paths for receiving a fluid during the CVI densification step. The porosity gradient fibrous preform can be heated to a cure temperature of between 93°C (200°F) and 121°C (250°F); though the cure temperature can vary depending on the composition of the resin 114. For example, various thermoset resins may have a cure temperature of between 260°C (500°F) and 371 °C (700°F). In this regard, it should be understood that the cure temperate is chosen depending on the type of resin used. Accordingly, the porosity gradient fibrous preform can be heated to a cure temperature of between 93°C (200°F) and 371°C (700°F), in accordance with various embodiments. After being cured, the resin 114 can be polymerized (i.e., the resin includes monomers before being cured and includes polymers after being cured).

At block 510, once consolidation is complete, the porosity gradient fibrous preform undergoes pyrolysis where the pore formers-and in various embodiments a portion of the resin and/or fugitive fibers (if any fugitive fibers exist in the porosity gradient fibrous preform are burned, melted, or evaporated, and the remaining portion of the resin and the fusible fibers are pyrolyzed into a carbon matrix and create a path through the thickness of the porosity gradient fibrous preform for infiltration of fluids. Subsequent to pyrolysis, the weight ratio percentage of the resin 114 (which at this point is carbon char (i.e., carbon)) in fabric layer 106 can be between 30% and 50%, between 35% and 45%, between 37% and 43%, or between 35% and 50%, in accordance with various embodiments. In various embodiments, the weight ratio percentage of the resin 114 (which at this point is carbon char (i.e., carbon)) in fabric layer 104 and/or fabric layer 108 is between 25% and 40%, between 28% and 38%, or between 30% and 35%, in accordance with various embodiments. In various embodiments, the weight ratio percentage of the resin 114 (which at this point is carbon char (i.e., carbon)) in fabric layer 102 and/or fabric layer 110 is between 20% and 35%, between 20% and 30%, or between 20% and 28%, in accordance with various embodiments.

At block 512, once pyrolysis is complete, the porosity gradient fibrous preform may undergo CVI densification (e.g., see FIG. 4). At block 514, once the CVI densification is complete, the porosity gradient fibrous preform may undergo skim cut machining where the surface of the porosity gradient fibrous preform modified to meet a set of standards for the porosity gradient fibrous preform. At block 516 a determination is made as to whether a desired part density is reached. If at block 516 the desired part density has not been reached, the operation returns to block 512. If at block 516 the desired part density has been reached, then, at block 518, a final machining may be performed on the porosity gradient fibrous preform to meet desired porosity gradient fibrous preform dimensions.

Therefore, the illustrative embodiments provide for the creation of complex contour fibrous preforms, with a variety of thicknesses, which take advantage of porosity gradient created by varying pore former type and or quantity. The porosity gradient preform construction of the present invention tends to improve part quality and make the CVI process more effective. The porosity gradient tends to enable higher densification yields in thick sections or complex contour geometries.

With reference to FIG. 6, a micro cross-section picture of a porosity gradient fibrous preform 600 manufactured using the systems and methods of the present invention (before undergoing CVI) is illustrated having uniform fiber volume and also having a porosity gradient. Porosity gradient fibrous preform 600 includes a carbon or ceramic matrix 614 reinforced with carbon or reinforcement fibers 612. The carbon or ceramic matrix 614 can be the product of a resin (e.g., see resin 114 of FIG. 1) after undergoing curing and pyrolysis. The carbon fibers 612 can be the product of the fibers (e.g., see fibers 112 of FIG. 1) after undergoing pyrolysis. Due to the varying types and/or quantity of pore formers in the layers of the porosity gradient preform, a porosity of a first fabric-resin layer 606 near a center of the preform is less than a porosity of a second fabric-resin layer 608 near an outer surface of the preform. Stated differently, the layer 608 includes a first plurality of pores 624 that create one or more paths through the porosity gradient fibrous preform for infiltration of a fluid (e.g., a fluid used during CVI for densification). The layer 606 includes a second plurality of pores 622 that create one or more paths through the porosity gradient fibrous preform for infiltration of a fluid (e.g., a fluid used during CVI for densification). The pores 624 can be in fluid communication with the pores 622 whereby a network of paths are created for receiving a fluid used during CVI densification. A volume of the first plurality of pores 624 is greater than a volume of the second plurality of pores 622. Stated differently, the layer 606 is less porous than the layer 608. Accordingly, the network of paths creates the porosity gradient.

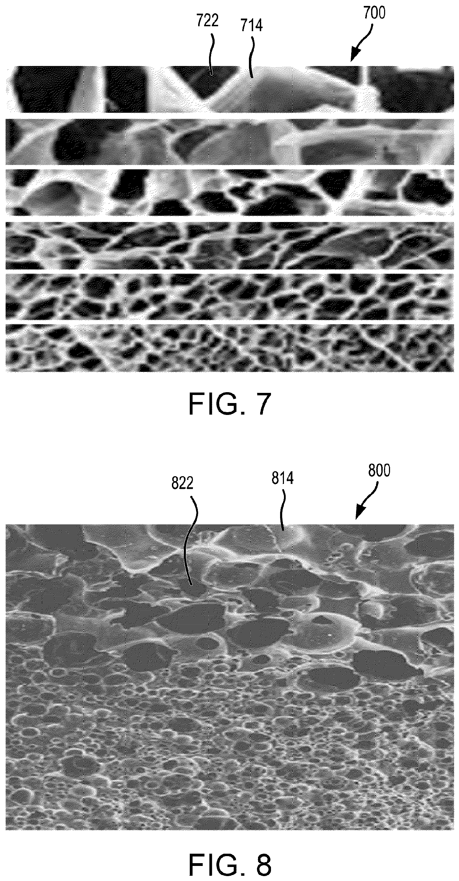

With reference to FIG. 7, a micro cross-section picture of a porosity gradient fibrous preform 700 manufactured using the systems and methods of the present invention (before undergoing CVI) is illustrated having uniform fiber volume and also having a porosity gradient. Preform 700 includes a plurality of layers of varying porosities. Preform 700 includes a carbon matrix 714 defining a plurality of pores 722.

With reference to FIG. 8, a micro cross-section picture of a porosity gradient fiber 800 manufactured using the systems and methods of the present invention (before undergoing CVI) is illustrated having uniform fiber volume and also having a porosity gradient. Preform 800 includes a plurality of layers of varying porosities. Preform 800 includes a carbon matrix 814 defining a plurality of pores 822.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the invention. The scope of the invention is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the invention in alternative embodiments.

Numbers, percentages, or other values stated herein are intended to include that value, and also other values that are about or approximately equal to the stated value, as would be appreciated by one of ordinary skill in the art encompassed by various embodiments of the present invention. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about," or "approximately" as used herein represent an amount close to the stated amount that still performs a desired function or achieves a desired result. For example, the term "substantially," "about," or "approximately" may refer to an amount that is within 10% of, within 5% of, within 1% of, within 0.1% of, and within 0.01% of a stated amount or value.

Furthermore, no element, component, or method step in the present invention is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this invention. Accordingly, the description is not intended to be exhaustive or to limit the principles described or illustrated herein to any precise form. Many modifications and variations are possible in light of the above teaching.

## Claims

1. A porosity gradient fibrous preform comprising:
a plurality of fabric-resin layers, each comprising a plurality of fibers and a resin; and
a plurality of pore formers mixed with the resin, a volume of the plurality of pore formers sequentially increases from a center of the porosity gradient fibrous preform toward an outer surface of the porosity gradient fibrous preform.

2. The porosity gradient fibrous preform of claim 1, wherein:
the plurality of pore formers is configured to be volatilized from the porosity gradient fibrous preform to create a path through the porosity gradient fibrous preform for infiltration of a fluid;
at least a portion of the resin is configured to be pyrolyzed from the porosity gradient fibrous preform to create the path through the porosity gradient fibrous preform for infiltration of the fluid; and
the path creates a porosity gradient in the porosity gradient fibrous preform.

3. The porosity gradient fibrous preform of claim 1 or 2, wherein a composition of the resin and the pore former are the same throughout the plurality of fabric-resin layers, and a ratio of the resin to the pore former sequentially decreases from a center of the porosity gradient fibrous preform toward an outer surface of the porosity gradient fibrous preform.

4. The porosity gradient fibrous preform of any preceding claim, wherein the plurality of fabric-resin layers includes a first fabric-resin layer having a first portion of the plurality of fibers, a first portion of the resin, and a first portion of the plurality of pore formers, and a second fabric-resin layer having a second portion of the plurality of fibers, a second portion of the resin, and a second portion of the plurality of pore formers, the second fabric-resin layer being positioned further outward from the center of the porosity gradient fibrous preform than the first fabric-resin layer,
wherein optionally, a first pore former volume of the first fabric-resin layer is less than a second pore former volume of the second fabric-resin layer.

5. The porosity gradient fibrous preform of claim 4, wherein, in response to applying heat to the first fabric-resin layer and the second fabric-resin layer, the second portion of the plurality of pore formers is configured to expand, and a first pore former volume of the first fabric-resin layer is configured to be less than a second pore former volume of the second fabric-resin layer.

6. The porosity gradient fibrous preform of any preceding claim, wherein the plurality of pore formers include a plurality of hollow microspheres, a wall of each microsphere of the plurality of microspheres includes a polymer resin configured to be compatible with the resin in the plurality of fabric-resin layers, the polymer resin in each microsphere of the plurality of microspheres and the resin in the plurality of fabric-resin layers are configured to combine together during curing, and the plurality of hollow microspheres and the resin in the plurality of fabric-resin layers are configured to pyrolyze to create interconnected pores through the porosity gradient fibrous preform, and/or
wherein the plurality of pore formers include a plurality of hollow microspheres, each microsphere includes a polymer resin configured to volatilize during pyrolysis to create a plurality of voids in the porosity gradient fibrous preform, and the plurality of voids are interconnected to create a path for infiltration of a fluid.

7. The porosity gradient fibrous preform of claim 5, wherein the plurality of pore formers include a plurality of expandable hollow microspheres configured to expand at least 2x an original volume at a room temperature in response to being heated to a temperature above the room temperature,
wherein optionally the expandable hollow microspheres include a blowing agent captured in a thermoplastic polymer.

8. The porosity gradient fibrous preform of claim 4, wherein a fiber volume of the plurality of fibers for each fabric-resin layer is uniform throughout the plurality of fabric-resin layers; and
a percentage of the fiber volume is at least 25% by volume of the porosity gradient fibrous preform.

9. A manufacturing method, comprising:
forming a porosity gradient fibrous preform by:
arranging a plurality of fabric-resin layers, each comprising a plurality of fibers and a resin;
mixing a plurality of pore formers with the resin, a volume of the plurality of pore formers sequentially increases from a center of the porosity gradient fibrous preform toward an outer surface of the porosity gradient fibrous preform; and
pyrolyzing the plurality of pore formers from the porosity gradient fibrous preform to create a path through the porosity gradient fibrous preform for infiltration of a fluid.

10. The manufacturing method of claim 9, wherein a porosity gradient is formed in the porosity gradient fibrous preform in response to pyrolyzing the plurality of pore formers from the porosity gradient fibrous preform, and/or
wherein a composition of the resin is the same throughout the plurality of fabric-resin layers.

11. The manufacturing method of claim 10, wherein arranging the plurality of fabric-resin layers includes positioning a second fabric-resin layer over a first fabric-resin layer having a first portion of the plurality of fibers, a first portion of the resin, and a first portion of the plurality of pore formers, the second fabric-resin layer having a second portion of the plurality of fibers, a second portion of the resin, and a second portion of the plurality of pore formers, the second fabric-resin layer being positioned further outward from the center of the porosity gradient fibrous preform than the first fabric-resin layer.

12. The manufacturing method of claim 11, wherein a first volume of the first portion of the plurality of pore formers is less than a second volume of the second portion of the plurality of pore formers.

13. The manufacturing method of claim 12, wherein the first volume is between 0% and 10% and the second volume is greater than the first volume, and/or
wherein a fiber volume of the plurality of fibers for each fabric-resin layer is uniform throughout the plurality of fabric-resin layers, and a percentage of the fiber volume is at least 25% by volume of the porosity gradient fibrous preform.

14. A manufacturing method, comprising:
forming a porosity gradient fibrous preform by:
positioning a second fabric-resin layer over a first fabric-resin layer having a first plurality of fibers, a first resin, and a first plurality of pore formers, the second fabric-resin layer having a second plurality of fibers, a second resin, and a second plurality of pore formers, the second fabric-resin layer being positioned further outward from a center of the porosity gradient fibrous preform than the first fabric-resin layer;
applying a first heat to the second fabric-resin layer and the first fabric-resin layer;
expanding the second plurality of pore formers so that a volume of the second plurality of pore formers is greater than a first volume of the first plurality of pore formers; and
pyrolyzing the first plurality of pore formers and the second plurality of pore formers from the porosity gradient fibrous preform to create a path through the porosity gradient fibrous preform for infiltration of a fluid.

15. The manufacturing method of claim 14, wherein pyrolyzing the first plurality of pore formers and the second plurality of pore formers from the porosity gradient fibrous preform creates a first porosity in the first fabric-resin layer and a second porosity in the second fabric-resin layer, the second porosity being greater than the first porosity.
